# EUROPEAN PATENT APPLICATION

(11) **EP 4 404 354 A1**
(43) Date of publication of application: **24.07.2024**
(21) Application number: 22948218.7
(22) Date of filing: 27.06.2022
(51) Int. Cl.: H01M 50/271, H01M 50/258

(54) **BATTERY AND ELECTRIC DEVICE**

(71) Applicant: Contemporary Amperex Technology Co., Limited, Ningde, Fujian 352100 (CN)
(72) Inventor: LONG, Chao, Ningde, Fujian 352100 (CN); CHEN, Xingdi, Ningde, Fujian 352100 (CN); WANG, Peng, Ningde, Fujian 352100 (CN)
(74) Representative: Jacob, Reuben Ellis
(86) International application number: PCT/CN2022/101414
(87) International publication number: WO 2024/000093

(57) **Abstract**

Embodiments of the present application provide a battery and an electric device. The battery comprises a housing, battery cells, and a stabilizing assembly; the housing comprises, in a height direction of the housing, a top and a bottom which are opposite; a plurality of battery cells are inversely arranged in the housing; top cover plates of the battery cells face the bottom of the housing; and the stabilizing assembly is fixedly connected to the battery cells. According to the embodiments of the present application, the structural stability and safety of the battery can be improved.

## Description

### Technical Field

The present application relates to the technical field of batteries, and in particular to a battery and an electrical device.

### Background

In recent years, the emergence of new energy vehicles has played a huge role in promoting social development and environmental protection. Power batteries, which are rechargeable batteries, are the power source of new energy vehicles and are widely used in the field of new energy vehicles.

In the prior art, the energy density of the battery is not high, resulting in waste of space, which in turn affects the performance of the electrical apparatus. Moreover, the existing battery has poor rigidity, cannot directly bear the load brought by other parts of the electrical apparatus, and is likely to cause safety accidents and affects the safety of the electrical apparatus.

### Summary of the Invention

Embodiments of the present application provide a battery and an electrical apparatus, which can improve the energy density and the safety of the battery.

In a first aspect, the embodiments of the present application provide a battery, including a box body, battery cells, and a stabilizing assembly. The box body has a top and a bottom opposite to each other in a height direction of the box body. A plurality of battery cells are arranged upside down in the box body, and a top cover plate of each of the battery cells is arranged to face the bottom of the box body. The stabilizing assembly is fixedly connected to the battery cells.

In the above technical solution, the box body has the top and the bottom opposite to each other in the height direction, and the top cover plate of each of the battery cells is arranged to face the bottom of the box body, so that the energy density of the battery can be improved, and the arrangement of the stabilizing assembly fixedly connected to the battery cells can improve the structural stability of the battery.

In some embodiments, the stabilizing assembly includes a first support plate and a second support plate, the first support plate is arranged at the top of the box body and is fixedly connected to the battery cells, and the second support plate is arranged at the bottom of the box body and is fixedly connected to the battery cells, so as to fix the positions of the battery cells.

In some embodiments, the surface of the second support plate that faces the battery cells is provided with a plurality of suspension beams, and the plurality of suspension beams are arranged at intervals along the second support plate in a length direction of the box body, and extend on the second support plate in a width direction of the box body.

In the above technical solution, the top end cover of the battery is prevented from directly abutting against the second support plate, which affects the performance of the battery.

In some embodiments, the top cover plate includes a functional area and shoulders, the functional area is provided with electrode terminals, the shoulders are located on two sides of the functional area in the length direction, and the battery cell is fixedly connected to the suspension beams via the shoulders.

In the above technical solution, the functional area is located between the shoulders, so that the shoulders can achieve a certain protective effect on the functional area. The battery cell is lap-jointed to the suspension beams by means of the shoulders, so that it is possible to prevent damage to the functional area due to stress, and prolong the service life of the battery cell.

In some embodiments, the electrode terminals are arranged between two adjacent suspension beams, and the electrode terminals are arranged spaced apart from the second support plate.

In the above technical solution, the electrode terminals are prevented from being in contact with the second support plate, so as to facilitate the electrical connection between the electrode terminals and the outside.

In some embodiments, in the height direction, the suspension beam has an extension height greater than that of the electrode terminal.

In the above technical solution, the electrode terminals are suspended between the suspension beams.

In some embodiments, the functional area is further provided with a pressure relief mechanism, the pressure relief mechanism is arranged spaced apart from the second support plate, and the electrode terminals are arranged on two sides of the pressure relief mechanism in the length direction.

In the above technical solution, the pressure relief mechanism is arranged spaced apart from the second support plate, so that it is possible to provide a larger pressure relief space for the pressure relief mechanism, reduce the risk caused by the discharge of emissions, and improve the safety of the battery.

In some embodiments, the shoulders of two adjacent battery cells are jointly fixed to the same suspension beam.

In the above technical solution, the adjacent battery cells share the same suspension beam, so that it is possible to reduce the number of suspension beams as much as possible and facilitate the manufacture of the second support plate.

In some embodiments, in the length direction, a width D1 of the suspension beam and an extension width D2 of the shoulder satisfy: 0.5D2 ≤ D1 ≤ 2D2.

In the above technical solution, the suspension beam is prevented from carrying only the battery cell on one side due to offset, and the suspension beam is only in contact with the shoulders of two adjacent battery cells, while avoiding contact with the functional area to affect the function of the battery cell.

In some embodiments, two adjacent battery cells are electrically connected to each other via a bus component, and an extension length of one of two adjacent suspension beams is less than that of the other in the width direction, to form an avoidance notch, the avoidance notch being configured to avoid the bus component.

In the above technical solution, the suspension beam is better adapted to the structure of the battery, facilitating the series connection, parallel or series-parallel of the battery cells.

In some embodiments, the suspension beams are integrally formed with or detachably connected to the second support plate, so as to facilitate the manufacture of the suspension beams or adjust the positions of the suspension beams according to the arrangement of the battery cells.

In some embodiments, in the height direction, an extension height of the suspension beam is a first dimension H1, the first dimension H1 satisfying 0.5 mm ≤ H1 ≤ 30 mm, so as to keep the volume of the battery moderate.

In some embodiments, a ratio H1/M of the first dimension H1 to the weight M of a single battery cell satisfies 0.05 mm/Kg ≤ H1/M ≤ 50 mm/ Kg.

In the above technical solution, the battery has a good energy density and an appropriate structural strength.

In some embodiments, the box body further includes a cover body arranged at the bottom, and the cover body is fixedly connected to the box body.

In some embodiments, the second support plate is fixedly connected to the cover body to increase the structural firmness of the battery.

In a second aspect, the embodiments of the present application provide an electrical apparatus, including a battery cell according to any one of the embodiments in the first aspect, the battery cell being configured to supply electric energy.

### Description of Drawings

In order to more clearly illustrate the technical solutions of the embodiments of the present application, the drawings to be used in the description of the embodiments of the present application will be described briefly below. Obviously, the drawings in the following description are merely some embodiments of the present application. For those skilled in the art, other drawings can also be obtained according to these drawings without any creative effort.
Fig. 1 is a schematic structural view of a vehicle provided in some embodiments of the present application;
Fig. 2 is a schematic structural view of a battery according to some embodiments of the present application in an assembled state;
Fig. 3 is a schematic exploded view of a battery according to some embodiments of the present application;
Fig. 4 is a schematic structural view of a second support plate and suspension beams of a battery according to some embodiments of the present application;
Fig. 5 is a schematic structural view of a battery cell according to some embodiments of the present application;
Fig. 6 is a schematic cross-sectional view of the battery shown in Fig. 2;
Fig. 7 is an enlarged schematic view of circle B in Fig. 6;
Fig. 8 is a schematic structural view of a collision test device for performing a collision test on a battery according to some embodiments of the present application;
Fig. 9 is a schematic structural view of a cover body of a battery according to some embodiments of the present application; and
Fig. 10 is a schematic structural view of the interior of a battery cell according to some embodiments of the present application.

The reference signs in Detailed Description are as follows:
1000, vehicle; 100, battery; 200, controller; 300, motor; 1, box body; 101, top; 102, bottom; 103, opening; 11, side plate; 2, battery cell; 201, functional area; 202, shoulder; 21, top cover plate; 211, electrode terminal; 212, pressure relief mechanism; 22, case; 23, electrode assembly; 24, bus component; 3, stabilizing assembly; 31, first support plate; 32. second support plate; 321, suspension beam; 322, avoidance notch; 4, cover body; 41, main body portion; 42, matching portion;
X, length direction; Y, width direction; Z, height direction.

### Detailed Description

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the foregoing description of the drawings are intended to cover non-exclusive inclusions. The terms "first", "second" and the like in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting", "connecting", "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the phrase "a plurality of" means two or more (including two).

The term "parallel" in the present application includes not only the absolutely parallel situation, but also the roughly parallel situation that is generally recognized in engineering; moreover, the term "perpendicular" not only includes the absolutely perpendicular situation, but also includes the roughly perpendicular situation that is generally recognized in engineering.

In the present application, the battery cell may include a lithium-ion secondary battery cell, a lithium-ion primary battery cell, a lithium sulfur battery cell, a sodium lithium-ion battery cell, a sodium-ion battery cell, a magnesium-ion battery cell, or the like, which will not be limited in the embodiments of the present application.

In the present application, the battery refers to a single physical module that includes one or more battery cells to provide higher voltage and capacity. For example, the battery mentioned in the present application may be a battery module, a battery pack, or the like. The battery generally includes a box body for packaging one or more battery cells. The box body can prevent liquid or other foreign matters from affecting charging or discharging of the battery cells. In the battery, a plurality of battery cells may be connected in series, in parallel or in series-parallel. The series-parallel connection means that some of the plurality of battery cells are connected in series and some are connected in parallel. A plurality of battery cells may be directly connected in series or in parallel or in series-parallel, and then an entirety composed of the plurality of battery cells may be accommodated in the box body. Of course, the battery may alternatively consist in that a plurality of battery cells are first connected in series, in parallel or in series-parallel to form a plurality of batteries, and the plurality of batteries are then connected in series or in parallel or in series-parallel to form a whole, and are accommodated in the box body.

At present, from the development of market situation, the application of traction batteries is becoming more and more extensive. Power batteries are used in energy storage power source systems such as hydraulic, thermal, wind and solar power stations as well as in electric vehicles such as electric bicycles, electric motorcycles and electric cars, and military equipment and aerospace fields. With the continuous expansion of the application field of the power batteries, the market demand is also constantly expanding.

In the related art, the opening of the box body of the battery usually faces upward in the vertical direction, the battery cells are fixed to the bottom of the battery, and electrode terminals face a cover body which covers the opening of the box body.

However, in the battery configured as above, the inventors have noticed that when the battery is arranged in an electrical apparatus, the bottom is bonded to the electrical apparatus, and the battery cells are fixed to the bottom of the battery, so that the top of the battery that is more vulnerable to collisions has a poor rigidity, and when the battery is in a collision, the battery cells therein are subjected to uneven stress, so that the battery likely to be damaged, resulting in poor safety of the battery and affecting the performance of the battery.

In view of this, the embodiments of the present application provide a battery, in which a box body has a top and a bottom opposite to each other in a height direction, and a top cover plate of each of battery cells is arranged to face the bottom of the box body, so that the energy density of the battery can be improved, and the arrangement of a stabilizing assembly fixedly connected to the battery cells can improve the structural stability of the battery.

The technical solutions described in the embodiments of the present application are applicable to batteries and electrical apparatus powered by the batteries.

The electrical apparatus may be, but not limited to, a vehicle, a mobile phone, a portable device, a laptop, a ship, a spacecraft, an electric toy, an electric tool, and so on. The vehicle may be a fuel vehicle, a gas vehicle or a new energy vehicle. The new energy vehicle may be an all-electric vehicle, a hybrid electric vehicle, an extended-range vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical apparatus is not specially limited in the embodiments of the present application.

It should be understood that the technical solutions described in the embodiments of the present application are not merely applicable to the electrical apparatus described above. However, for the sake of brevity, the following embodiments will be described by taking an electric vehicle 1000 as an example.

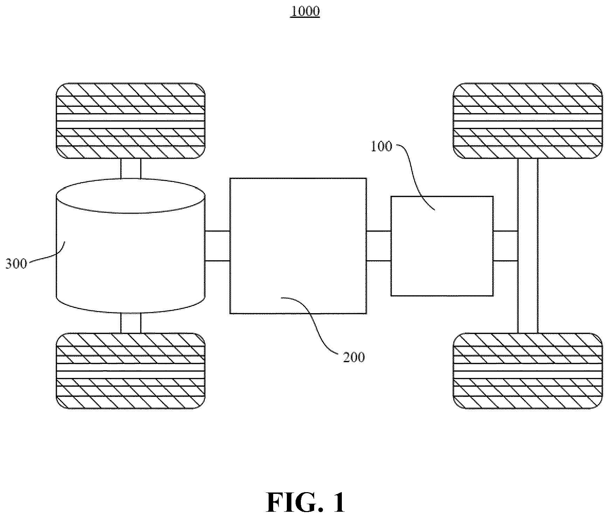

Fig. 1 is a schematic structural view of a vehicle 1000 provided in some embodiments of the present application. As shown in Fig. 1, the vehicle 1000 may be a fuel vehicle, a gas vehicle or a new energy vehicle. The new energy vehicle may be an all-electric vehicle, a hybrid vehicle, an extended-range vehicle, etc. The interior of the vehicle 1000 is provided with a battery 100. The battery 100 may be provided at the bottom or head or tail of the vehicle 1000.

The battery 100 may be configured to supply power to the vehicle 1000. For example, the battery 100 may be used as an operation power supply of the vehicle 1000. The vehicle 1000 may further include a controller 200 and a motor 300. The controller 200 is configured to control the battery 100 to power the motor 300. For example, the controller is used for meeting the operating power demand when the vehicle 1000 is starting, navigating and driving. In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

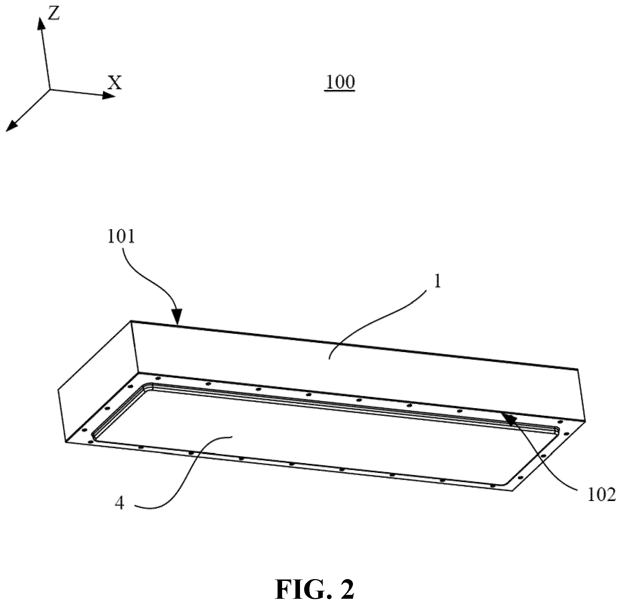

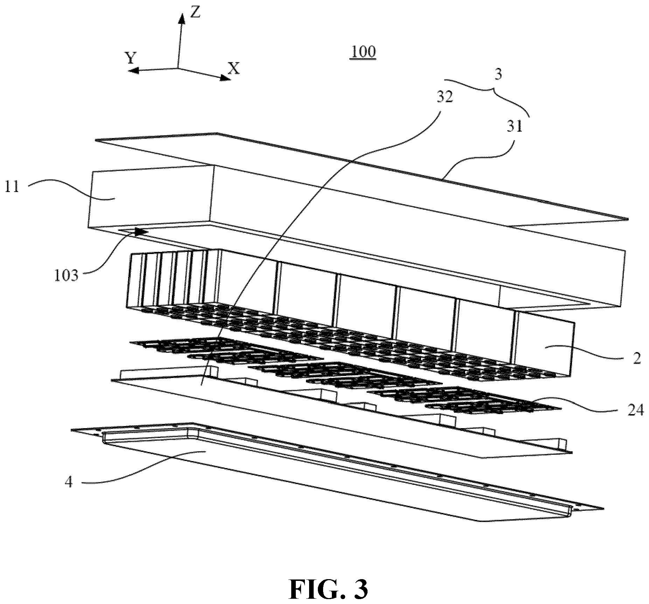

Fig. 2 is a schematic structural view of a battery 100 according to some embodiments of the present application in an assembled state. Fig. 3 is a schematic exploded view of a battery 100 according to some embodiments of the present application. As shown in Figs. 2 and 3, in some embodiments of the present application, a battery 100 includes a box body 1, battery cells 2, and a stabilizing assembly 3. The box body 1 has a top 101 and a bottom 102 opposite to each other in a height direction of the box body 1. The plurality of battery cells 2 are arranged upside down in the box body 1, and a top cover plate 21 of each of the battery cells 2 is arranged to face the bottom 102 of the box body 1. The stabilizing assembly 3 is fixedly connected to the battery cells 2.

By the box body 1 having a top 101 and a bottom 102 opposite to each other in a height direction of the box body 1, it is meant that the top 101 and the bottom 102 of the box body 1 are arranged in sequence from top to bottom in the height direction. For the convenience of description, in the embodiments of the present application, the height direction of the box body 1 is taken as the Z direction, that is, the vertical direction. It should be understood that the height direction Z of the box body 1 may also be along another direction, and other directions will be defined below in detail in order to indicate the arrangement direction of the battery cells 2 and other factors, and will not be further described here.

By the plurality of battery cells 2 being arranged upside down in the box body 1, and a top cover plate 21 of each of the battery cells 2 being arranged to face the top 101 of the box body 1, it is meant that the battery cells 2 and the box body 1 are arranged upside down with respect to each other in the height direction Z, and the bottom 102 of the battery cell 2 is located at the top 101 of the box body 1. By arranging the battery cells 2 and the box body 1 upside down with respect to each other, the rigidity of the top 101 of the battery 100 can be increased, thereby increasing the safety of the battery 100. Moreover, the top cover plate 21 of the battery cell 2 faces the bottom 102 of the battery 100, so that it is possible to increase the energy density of the battery 100 and improve the usability of the battery 100.

The stabilizing assembly 3 is fixedly connected to the battery cells 2, that is, the stabilizing assembly 3 is fixedly connected to the bottom 102 and the top cover plate 21, namely two ends, of each battery cell 2, thereby supporting the battery cell 2 to increase the structural strength of the battery 100.

In some embodiments of the present application, the stabilizing assembly 3 includes a first support plate 31 and a second support plate 32, the first support plate 31 is arranged at the top 101 of the box body 1 and is fixedly connected to the battery cells 2, and the second support plate 32 is arranged at the bottom 102 of the box body 1 and is fixedly connected to the battery cells 2.

The first support plate 31 and the second support plate 32 are arranged at the top 101 and the bottom 102 of the box body 1 respectively, and are fixedly connected to the battery cells 2 to fix the positions of the battery cells 2 and enhance the structural stability of the battery 100.

Optionally, the first support plate 31 may be located at the top 101 of the box body 1 as a part of the box body 1, or may be a separate plate body arranged between the box body 1 and the battery cells 2, with one side being fixedly connected to the box body 1 and the other side being fixedly connected to the battery cells 2, which will not be limited in the embodiments of the present application.

Optionally, the battery cells 2 may be directly bonded to the first support plate 31 and the second support plate 32 by means of glue, or may be fixedly connected to the first support plate 31 and the second support plate 32 in other ways.

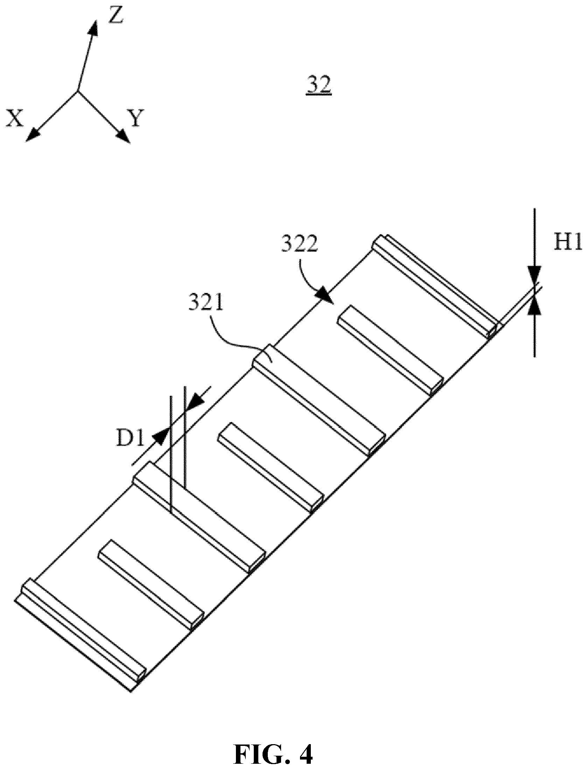

Fig. 4 is a schematic structural view of a second support plate 32 and suspension beams 321 of a battery 100 according to some embodiments of the present application. As shown in Fig. 4, in some embodiments of the present application, the surface of the second support plate 32 that faces the battery cells 2 is provided with a plurality of suspension beams 321, and the plurality of suspension beams 321 are arranged at intervals along the second support plate 32 in a length direction of the box body 1, and extend on the second support plate 32 in a width direction of the box body 1.

For the convenience of description, in the embodiments of the present application, the length direction of the box body 1 is taken as the X direction, and the width direction as the Y direction. The length direction X and the width direction Y are respectively perpendicular to the height direction Z. It can be understood that when the included angle between the length direction X, the height direction Z and the width direction Y is 85°-95°, the three are considered perpendicular to one another. The length direction X and the width direction Y may also be other directions, and the two may not be perpendicular to the height direction Z, which will not be described in the present application.

The suspension beams 321 protrude from the second support plate 32 toward the battery cells 2 in the height direction Z, so as to support and carry the battery cells 2. The plurality of suspension beams 321 are arranged on the second support plate 32 at intervals in the length direction X, that is, the suspension beams 321 are arranged in the length direction X to support the battery cells 2 at a plurality of positions. Since the box body 1 is internally provided with a plurality of battery cells 2, the battery cells 2 are arranged in an array inside the box body 1, and the suspension beams 321 extend in the width direction Y, a single suspension beam 321 may support multiple battery cells 2 in the width direction Y

The arrangement of the suspension beams 321 on the second support plate 32 can improve the structural stability of the battery 100 and prevent the top end cover of the battery 100 from directly abutting against the second support plate 32, which affects the performance of the battery 100.

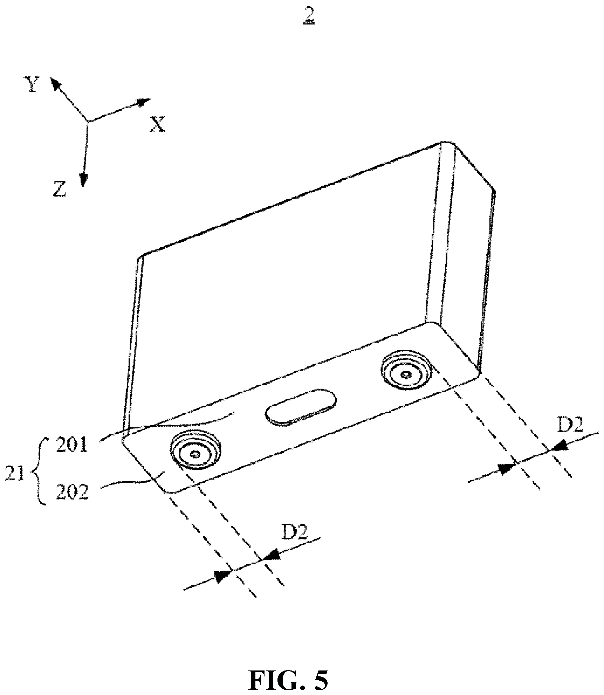

Fig. 5 is a schematic structural view of a battery cell 2 according to an embodiment of the present application. As shown in Fig. 5, in some embodiments of the present application, the top cover plate 21 includes a functional area 201 and shoulders 202, the functional area 201 is provided with electrode terminals 211, the shoulders 202 are located on two sides of the functional area 201 in the length direction X, and the battery cell 2 is fixed to the suspension beams 321 via the shoulders 202.

The functional area 201 indicates that the top cover plate 21 is provided with an area that enables the battery cell 2 to realize its own function, or an area that enables the battery cell 2 to interact with the outside, for example, the electrode terminals 211 that enable the battery cell 2 to be electrically connected to the outside. Since the functional area 201 is often provided with the electrode terminals 211 and other components, the functional area 201 should not be subjected to stress during the use of the battery 100. The shoulder 202 indicates the area of the top cover plate 21 that can be subjected to stress except the functional area 201.

Arranging the functional area 201 provided with the electrode terminals 211 between the shoulders 202 can make the shoulders 202 achieve a certain protective effect on the functional area 201. The battery cell 2 is lap-jointed to the suspension beams 321 via the shoulders 202, so that it is possible to prevent the electrode terminals 211 of the functional area 201 from being damaged due to stress, and prolong the service life of the battery cell 2.

Optionally, the battery cell 2 may be directly bonded to the suspension beams 321 by means of glue, or may be fixedly connected to the suspension beams 321 in other ways, which will not be limited in the embodiments of the present application here.

In some embodiments of the present application, the electrode terminals 211 are arranged between two adjacent suspension beams 321, and the electrode terminals 211 are arranged spaced apart from the second support plate 32.

Since the functional area 201 is located between the two shoulders 202, the shoulders 202 are lap-jointed to the suspension beams 321, the electrode terminals 211 of the functional area 201 are also located between the two adjacent suspension beams 321, and the electrode terminals 211 are arranged spaced apart from the second support plate 32, that is, the electrode terminals 311 are not in contact with the second support plate 32, the electrode terminals 211 can be considered as being suspended between the two suspension beams 321, so as to extract the electric energy from the battery cell 2 through the electrode terminals 211 and improve the usability of the battery cell 2.

In some embodiments of the present application, in the height direction Z, the suspension beam 321 has an extension height greater than those of the electrode terminal 211 and the pressure relief mechanism 212.

In the height direction Z, the extension height of the suspension beam 321 is greater than that of the electrode terminal 211, so that the electrode terminals 211 and the pressure relief mechanism 212 can be suspended between the adjacent suspension beams 321, so as to avoid contact with other components to affect the function.

In some embodiments of the present application, the functional area 201 is further provided with a pressure relief mechanism 212, the pressure relief mechanism 212 is arranged spaced apart from the second support plate 32, and the electrode terminals 211 are arranged on two sides of the pressure relief mechanism 212 in the length direction X.

The pressure relief mechanism 212 refers to an element or component that is actuated when an internal pressure of the battery cell 2 reaches a predetermined threshold so as to release the internal pressure. That is, when the internal pressure of the battery cell 2 reaches a predetermined threshold, the pressure relief mechanism 212 generates an action or is activated into a certain state, such that the internal pressure of the battery cell 2 can be released. The action generated by the pressure relief mechanism 212 may include, but not limited to, at least a part of the pressure relief mechanism 212 being fractured, broken, torn or opened, so as to form an opening 103, a channel or the like for releasing the internal pressure. In this case, high-temperature and high-pressure substances inside the battery cell 2 are discharged outwards from an actuated position as emissions. In this way, the pressure in the battery cell 2 can be released at a controllable pressure, thereby avoiding potential, more serious accidents. The pressure relief mechanism 212 may take the form of an explosion-proof valve, a gas valve, a pressure relief valve, a safety valve or the like, and may specifically use a pressure sensitive element or structure.

Arranging the electrode terminals 211 on two sides of the pressure relief mechanism 212 can reduce the influence of the pressure relief structure 212 on the electrode terminals 211 during pressure relief. Moreover, the pressure relief mechanism 212 is arranged spaced apart from the second support plate 32, that is, the pressure relief mechanism 212 is not in contact with the second support plate 32, thereby providing a larger pressure relief space for the pressure relief mechanism 212, reducing the risk caused by the discharge of emissions. and improving the safety of the battery 100.

In some embodiments of the present application, the shoulders 202 of two adjacent battery cells 2 are jointly fixed to the same suspension beam 321.

Where a plurality of battery cells 2 are arranged in the box body 1, the plurality of battery cells 2 are arranged adjacent to each other in the box body 1. Since the suspension beams 321 are arranged at intervals along the second support plate 32 in the length direction X, the shoulders 202 are located on two sides of the functional area 201 in the length direction X, so that each shoulder 202 can be located at the connection between the adjacent battery cells 2, and the shoulders 202 of two adjacent battery cells 2 can thus be jointly fixed to the same suspension beam 321.

The battery cells 2 adjacent to each other in the length direction X share the same suspension beam 321, so that it is possible to reduce the number of suspension beams 321 as much as possible and facilitate the manufacture of the second support plate 32.

In some embodiments of the present application, in the length direction X, a width D1 of the suspension beam 321 and an extension width D2 of the shoulder 202 satisfy: 0.5D2 ≤ D1 ≤ 2D2.

When the width D1 of the suspension beam 321 is greater than or equal to 0.5 times the extension width D2 of the shoulder 202, sufficient support force can be provided for the battery cell 2. When the suspension beam 321 carries two adjacent battery cells 2 at the same time, the width of the suspension beam 321 in the length direction X is less than or equal to 2 times the extension width of the shoulder 202, so that the suspension beam 321 can only be in contact with the shoulders 202 of the two adjacent battery cells 2, so as to avoid contact with the functional area 201 to affect the function of the battery cells 2.

Preferably, the relationship between the width D1 of the suspension beam 321 and the extension width D2 of the shoulder 202 may satisfy D2 ≤ D1 ≤ 2D2. Since the suspension beam 321 may be offset between adjacent battery cells 2, the width of the suspension beam 321 in the length direction X is greater than or equal to the extension width of the shoulder 202, so that the suspension beam 321 can carry two adjacent battery cells 2 at the same time, without the problem of poor structural stability of the battery 100 due to uneven stress when only one of the two adjacent battery cells can be carried due to offset.

Referring to Fig. 4 again, as shown in Fig. 4, in some embodiments of the present application, two adjacent battery cells 2 are electrically connected to each other via a bus component 24, and an extension length of one of two adjacent suspension beams 321 is less than that of the other in the width direction Y, to form an avoidance notch 322. The avoidance notch 322 is configured to avoid the bus component 24.

The bus component 24 is a component that enables the electrical connection between the plurality of battery cells 2. The bus component 24 bridges the electrode terminals 211 of adjacent battery cells 2 to connect the plurality of battery cells 2 in series, in parallel or in series-parallel. Since, in the embodiments of the present application, the bus component 24 bridges the electrode terminals 211 of adjacent battery cells 2 in the length direction X, at least a part of the suspension beam 321 extending in the width direction Y needs to avoid the bus component, to form the avoidance notch 322.

The extension length of one of the two adjacent suspension beams 321 is smaller than that of the other, that is, the suspension beams 321 with longer extension lengths and the suspension beams 321 with shorter extension lengths are alternately distributed. Optionally, the lengths of the suspension beams 321 may also be adjusted according to the arrangement of the bus component 24. Moreover, the extension length of the suspension beam 321 in the width direction Y merely indicates the total length of the suspension beam 321 in the width direction Y, that is to say, the avoidance notch 322 may be arranged at one end of the suspension beam 321, or may be arranged in the middle of the suspension beam 321, depending on the arrangement of the bus component 24, which will not be specially limited in the embodiments of the present application.

Providing the avoidance notch 322 at the suspension beam 321 can make the suspension beam 321 better adapt to the structure of the battery 100, facilitating the series, parallel or series-parallel connection of the battery cells 2.

In some embodiments of the present application, the suspension beams 321 may be integrally formed with or detachably connected to the second support plate 32.

Where the suspension beams 321 are integrally formed with the second support plate 32, the manufacture of the second support plate 32 is facilitated. Where the suspension beams 321 are detachably connected to the second support plate 32, the positions of the suspension beams 321 can be adjusted according to the arrangement of the battery cells 2, so that the battery 100 has a more stable structure.

In some optional embodiments, the surfaces of the second support plate 32 and the suspension beams 321 are coated with an insulating material.

In order to avoid affecting the electrical connection between the battery cells 2, the second support plate 32 and the suspension beams 321 are insulating members. It can be understood that the second support plate 32 and the suspension beams 321 each may be made of an insulating material as a whole, or each may be an object whose surface is coated with an insulating material so as to exhibit insulation properties as a whole. When the second support plate 32 and the suspension beams 321 each are an object whose surface is covered with an insulating material, a core material may be a metal material, an insulating material, a composite material, etc., and an outer surface of the core material is covered with the insulating material.

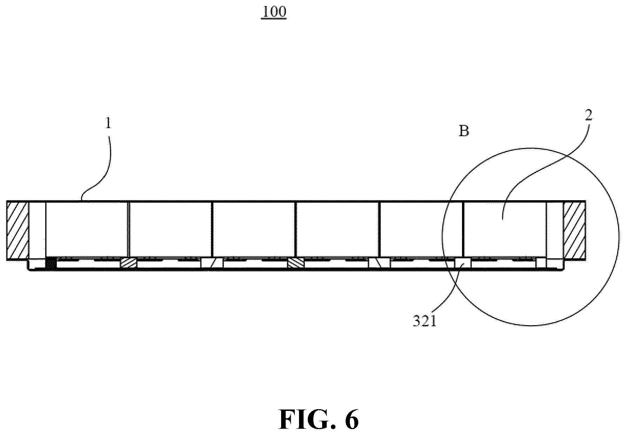

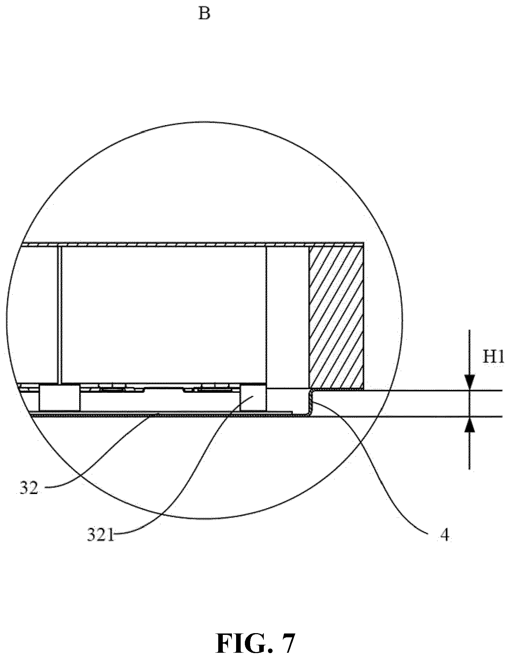

Fig. 6 is a schematic cross-sectional view of the battery 100 shown in Fig. 2. Fig. 7 is an enlarged schematic view of circle B in Fig. 6. As shown in Figs. 6 and 7, in some embodiments of the present application, in the height direction Z, the extension height of the suspension beam 321 is a first dimension H1, the first dimension H1 satisfying 0.5 mm ≤ H1 ≤ 30 mm.

The suspension beam 321 has a certain size in the height direction Z, so that it can protrude from the second support plate 32 to support and carry the battery cells 2. The suspension beam 321 maintains the first dimension H1, so that it is possible for the top cover plate 21 of the battery cell 2 to be kept at a certain distance from the bottom 102 of the box body 1, so as to keep the energy density of the battery 100 moderate.

In some embodiments of the present application, the ratio H1/M of the first dimension H1 to the weight M of a single battery cell 2 satisfies 0.05 mm/Kg≤H1/M≤50 mm/Kg.

The ratio H1/M of the first dimension H1 to the weight M of a single battery cell 2 can indicate the energy density and the structural strength of the battery 100. When the ratio of the first dimension H1 to the weight M of a single battery cell 2 is too large, the energy density of the battery 100 will be too low accordingly. When the ratio of the first dimension H1 to the weight M of a single battery cell 2 is too small, the structural strength of the battery 100 will be insufficient accordingly, and a safety accident may occur in a collision. Therefore, the ratio H1/M of the first distance H1 to the weight M of a single battery cell 2 satisfies 0.05 mm/Kg ≤ H1/M ≤ 50 mm/Kg. Within this value range, the battery 100 has a good energy density and an appropriate structural strength.

To verify that a battery 100 having the ratio H1/M of the first dimension H1 to the weight M of a single battery cell 2 within an appropriate range has a good performance, a structural strength test may be performed on the battery 100. During the structural strength test of the battery 100, illustratively, the structural strength of the battery 100 may be determined through a plurality of tests such as a shear strength test and a compressive strength test.

In the shear strength test, illustratively, the battery 100 may be fixed between clamps of a shear tester, then a detection head of the shear tester is used to drive the battery 100 to move in the length direction X or in the width direction Y at a speed of 5 mm/min, and a pulling force F exerted by the detection head is recorded when the box body 1 is damaged. Taking a projection area of the battery 100 in the height direction Z as an area A, the value of F/A is the shear strength that the battery 100 can withstand.

In the compressive strength test, illustratively, a pressing head may be used to apply pressure to the battery 100 in the height direction Z and in the length direction X or in the width direction Y, advances toward the battery 100 at a speed of 2 m/s, and is stopped for 10 minutes after a pressing force reaches 50 KN or the deformation of the battery 100 reaches 30%, and the battery 100 is left standing and observed at the ambient temperature for 2 hours after the compressive strength test.

Optionally, the structural strength of the battery 100 may be tested through other structural strength tests, which will not be limited in the embodiments of the present application here.

Table 1 shows the test results of the structural strength of the battery 100 by using the above method when the first distance H1, the weight M of a single battery cell 2 and the value of H1/M are respectively different.

**Table 1**

| | H1 (mm) | M (Kg) | H1/M (mm/Kg) | Structural strength test |
|---|---|---|---|---|
| Example 1 | 0.5 | 10 | 0.05 | Fair |
| Example 2 | 5 | 5 | 1 | Fair |
| Example 3 | 10 | 4 | 2.5 | Good |
| Example 4 | 10 | 2 | 5 | Good |
| Example 5 | 20 | 1 | 20 | Excellent |
| Example 6 | 30 | 0.6 | 50 | Fair |
| Comparative Example 1 | 0.2 | 5 | 0.04 | Poor |
| Comparative Example 2 | 52 | 1 | 52 | Poor |

As shown in Table 1, when H1 satisfies 0.5 mm ≤ H1 ≤ 30 mm, and H1/M satisfies 0.05 mm/Kg ≤ H1/M ≤ 50 mm/Kg, the battery 100 has a better structural strength in the structural strength test.

In some other optional embodiments, the battery cells 2 may not be fixedly connected to the suspension beams 321 of the second support plate 32, but only mounted on the suspension beams 321.

In this case, the first dimension H1 satisfies 5 mm ≤ H1 ≤ 30 mm, and the ratio H1/M of the first dimension H1 to the weight M of a single battery cell 2 satisfies 0.5 mm/Kg ≤ H1/M ≤ 50 mm/Kg. Preferably, H1/M satisfies 1 mm/Kg ≤ H1/M ≤ 30 mm/Kg. Within this value range, the battery 100 has a good energy density and an appropriate structural strength.

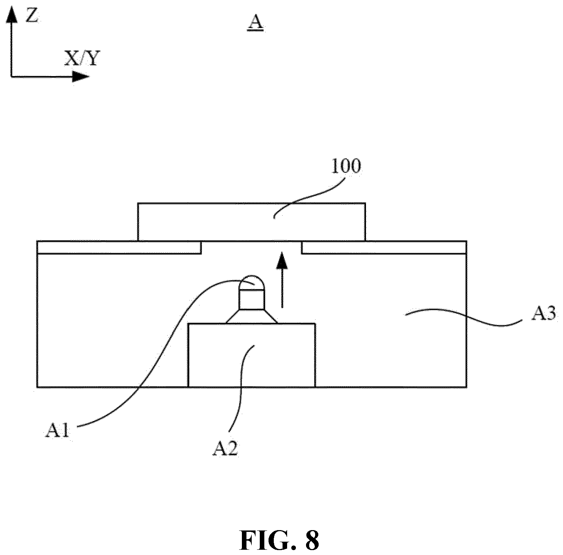

Fig. 8 is a schematic structural view of a collision test device A for performing a collision test on a battery 100 according to some embodiments of the present application. To verify that a battery 100 having the ratio H1/M of the first distance H1 to the weight M of a single battery cell 2 within an appropriate range has a good performance, illustratively, a collision test is performed on the battery 100 by a collision test device A. As shown in Fig. 8, the collision test device A includes an impact head A1, a launching device A2 and a rack A3. During the test, the battery 100 is placed on the rack A3, such that the impact head A1 is driven by the launching device A2, and impacts on the battery 100 at a certain speed. Test conditions may be selected as follows: an impact direction is the height direction Z, an impact position is a weak point of the battery 100, and an impact energy is 90J.

Since the battery 100 is applied to an electrical apparatus such as a vehicle 1000, the top 101 is mounted to the vehicle 1000, and the bottom 102 of the battery 100 is impacted in the height direction Z, so that the scene after the battery 100 is mounted to the vehicle 1000 can be simulated. The weak point of the battery 100 indicates a vulnerable position of the battery 100, which is usually within a radius of 240 mm from the geometric center of the battery 100, and impacting the weak point of the battery 100 which can simulate the state of the battery 100 after the position of the battery 100 that has a weak structural strength is impacted. The impact energy of 90J can be equivalent to the impact head A1 impacting the battery 100 at a speed of 4.2 m/s. It can be understood that another impact energy can also be used to impact the battery 100, for example, 120J (at an impact speed 4.9 m/s) or 150J (at an impact speed 5.5 m/s). During the actual experiment, the battery 100 may be impacted multiple times with one impact energy, or the battery 100 may be impacted multiple times with multiple impact energies.

After the battery 100 is impacted by the collision test device A, it is observed at the ambient temperature for 2 hours to detect whether the battery 100 catches fire or explodes. Optionally, after the battery 100 is subjected to a collision test with the collision test device A, the battery 100 may also be tested for the enclosure protection level, which will not be limited in the embodiments of the present application.

Table 2 shows the test results of the collision test on the battery 100 by using the above method when the first distance H1, the weight M of a single battery cell 2 and the value of H1/M are respectively different, with the battery cells 2 being mounted on the suspension beams 321.

**Table 2**

| No. | H1 (mm) | M (Kg) | H1/M (mm/Kg) | Collision test |
|---|---|---|---|---|
| Example 7 | 5 | 10 | 0.5 | No fire, no explosion |
| Example 8 | 10 | 5 | 2 | No fire, no explosion |
| Example 9 | 15 | 3 | 5 | No fire, no explosion |
| Example 10 | 30 | 1 | 30 | No fire, no explosion |
| Example 11 | 25 | 0.5 | 50 | No fire, no explosion |
| Comparative Example 3 | 3 | 5 | 0.2 | Fire, explosion |
| Comparative Example 4 | 52 | 1 | 52 | Fire, explosion |

As shown in Table 2, when H1 satisfies 5 mm ≤ H1 ≤ 30 mm, and H1/M satisfies 0.5 mm/Kg ≤ H1/M ≤ 50 mm/Kg, the battery 100 will not catch fire or explode in a collision test of a certain intensity, and thus has a better safety.

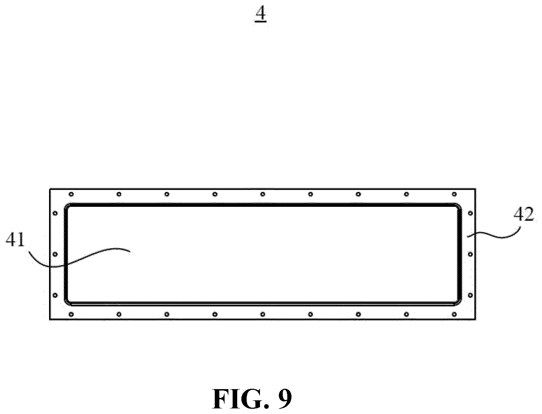

Fig. 9 is a schematic structural view of a cover body 4 of a battery 100 according to some embodiments of the present application. As shown in Fig. 9, in some embodiments of the present application, the box body 1 further includes a cover body 4 arranged at the bottom 102, and the cover body 4 is fixedly connected to the box body 1.

When the bottom 102 of the box body 1 is provided with a cover body 4, that is, the bottom 102 of the box body 1 has an opening 103, the opening 103 faces downward in the height direction Z, and the cover body 4 covers the opening 103, so that the box body 1 has a relatively sealed structure.

In some optional embodiments, the cover body 4 includes a main body portion 41 and a matching portion 42. The matching portion 42 is arranged in a circumferential direction of the main body portion 41 and match the side plates 11. That is, the main body portion 41 covers the opening 103 formed by the side plates 11, and the matching portion 42 is fixed to the side plates 11 to fixedly connect the cover body 4 to the side plates 11. Optionally, the matching portion 42 may be bolted to the side plate 11, or the matching portion 42 may be fixedly connected to the side plates 11 in other ways.

In the height direction Z, the main body portion 41 protrudes from an extension plane of the bottom 102 relative to the matching portion 42. There is a relatively larger distance between the battery cells 2 arranged inside the box body 1 and the cover body 4, so as to make room for the bus component 24 or the second support plate 32. It should be understood that the protruding distance of the main body portion 41 relative to the matching portion 42 should be selected based on the energy density of the battery 100, and should not be too large to increase the volume of the battery 100 while reducing the energy density of the battery 100.

In some embodiments of the present application, the second support plate 32 may be fixedly connected to the cover body 4, to increase the structural firmness of the battery 100. Optionally, the second support plate 32 may abut against the cover body 4, which will not be limited in the embodiments of the present application.

It should be understood that the above descriptions of some embodiments of the battery 100 are only illustrative, and the battery 100 may also have other structures.

Referring to Figs. 2 and 3 again, in some optional embodiments, the first support plate 31 is located at the top 101 of the box body 1 as a part of the box body 1. The box body 1 further includes side plates 11. The side plates 11 are distributed along the periphery of the opening 103 facing the bottom 102, and the first support plate 31 and the cover body 4 are respectively fixedly connected to the side plates 11. That is, the first support plate 31, the side plates 11 and the cover body 4 are arranged in sequence from top to bottom in the height direction Z, the first support plate 31 is a plate body extending in the length direction X, and the side plates 11 are plate bodies extending in the height direction Z. The side plates 11 are arranged around the first support plate 31, and the opening 103 is formed at the bottom 102. The cover body 4 covers the opening 103, so that the interior of the box body 1 has a space for arranging the battery cells 2. The battery cells 2 are arranged at the first support plate 31, so that it is possible to increase the rigidity of the top 101 of the battery 100 and reduce the possibility of damage to the battery 100 in a collision.

Optionally, the side plates 11 may be integrally formed with the first support plate 31, or may be fixedly connected to the first support plate 31 by welding, bonding, fastening, flow drill screwing process or other connection means, which will not be limited in the embodiments of the present application.

In some optional embodiments, a cooling channel (not shown in the figures) is buried inside the first support plate 31. Since the battery cells 2 are arranged at the first support plate 31, and the bottom 102 of each battery cell 2 is in contact with the first support plate 31, for the consideration of the performance of the battery 100, a cooling channel is buried inside the first support plate 31, and a cooling gas or liquid passes through the channel, so that it is possible to reduce the temperature of the battery 100 during operating of the battery 100, thereby prolonging the service life and improving the usability of the battery 100.

In some other optional embodiments, a cooling channel may be provided between the battery cell 2 and the first support plate 31 as a water cooling plate, or be formed as any other component that can be configured to provide a temperature reduction effect, which will not be limited in the embodiments of the present application here.

Optionally, the box body 1 may be a simple three-dimensional structure such as a cuboid or a cylinder, or a complex three-dimensional structure composed of simple three-dimensional structures such as a cuboid or a cylinder. The material of the box body 1 may be an alloy material such as an aluminum alloy and an iron alloy, or may be a polymer material such as polycarbonate and polyisocyanurate foam, or may be a composite material such as a combination of glass fiber and epoxy resin. In order to improve the sealing performance of the box body 1, a sealing member, such as a sealant and a sealing ring, may also be provided between the cover body 4 and the side plates 11. The above feasible configurations are not limited in the embodiments of the present application.

Optionally, in the battery 100, a plurality of battery cells 2 may be connected in series, in parallel or in series-parallel. The series-parallel connection means that some of the plurality of battery cells 2 are connected in series and some are connected in parallel. A plurality of battery cells 2 may be directly connected in series or in parallel or in series-parallel, and then an entirety composed of the plurality of battery cells 2 may be accommodated in the box body 1. Of course, the battery 100 may alternatively consist in that a plurality of battery cells 2 are first connected in series, in parallel or in series-parallel to form a plurality of battery 100 modules, and the plurality of battery 100 modules are then connected in series or in parallel or in series-parallel to form a whole, and are accommodated in the box body 1.

Each battery cell 2 may be a secondary battery or a primary battery; or may be a lithium-sulfur battery, a sodium-ion battery or a magnesium-ion battery, but is not limited thereto. The battery cell 2 may be in the shape of a cylinder, a flat body, a cuboid or others.

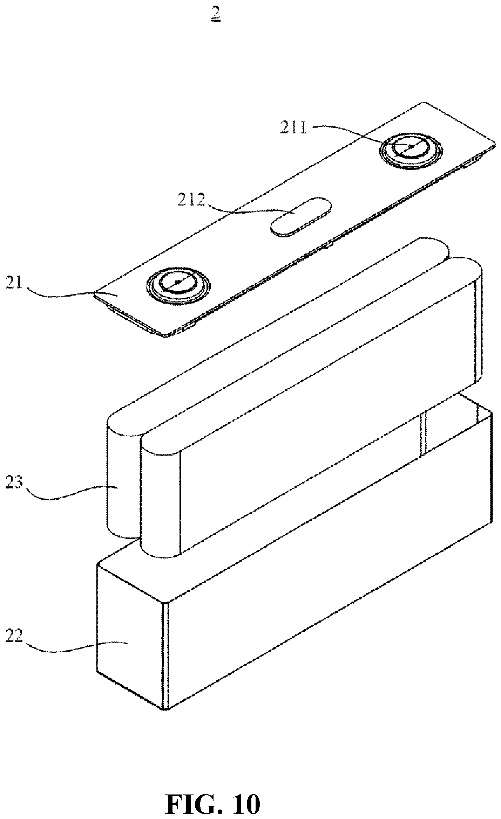

Fig. 10 is a schematic structural view of the interior of a battery cell 2 according to some embodiments of the present application. The battery cell 2 is the smallest unit constituting the battery 100. As shown in Fig. 10, the battery cell 2 further includes a top cover plate 21, a case 22, an electrode assembly 23 and other functional components.

The top cover plate 21 is a component that covers the opening of the case 22 to isolate the internal environment of the battery cell 2 from the external environment. Without limitation, the shape of the top cover plate 21 may be adapted to the shape of the case 22 to match the case 22. Optionally, the top cover plate 21 may be made of a material (such as an aluminum alloy) with a certain hardness and strength, so that the top cover plate 21 is not easy to be deformed when being pressed and collided, the battery cell 2 can have a higher structural strength, and the safety performance can also be improved. The top cover plate 21 is provided with functional components such as electrode terminals 211 and an explosion-proof valve. The electrode terminals 211 may be used for electrical connection with the electrode assembly 23 for outputting or inputting electric energy of the battery cell 2. In some embodiments, the top cover plate 21 may also be provided with a pressure relief mechanism 212 for releasing the internal pressure when the internal pressure or temperature of the battery cell 2 reaches a threshold value. The top cover plate 21 may be made of various materials, such as copper, iron, aluminum, stainless steel, an aluminum alloy, and plastic, which will not be specially limited in the embodiments of the present application. In some embodiments, an insulating member may be also provided on the inner side of the top cover plate 21, and the insulating member may be used to isolate an electrical connection plate in the case 22 from the top cover plate 21 to reduce the risk of short circuit. Illustratively, the insulating member may be made of plastic, rubber or the like.

The case 22 is an assembly for matching the top cover plate 21 to form the internal environment of the battery cell 2. The formed internal environment may be used to accommodate the electrode assembly 23, an electrolyte solution (not shown in the figures) and other components. The case 22 and the top cover plate 21 may be separate components, the case 22 may be provided with an opening, and the internal environment of the battery cell 2 is formed by making the top cover plate 21 cover the opening at the opening. Without limitation, the top cover plate 21 and the case 22 may also be integrated with each other. Specifically, the top cover plate 21 and the case 22 may form a common connection face before other components are inserted into the case. When the interior of the case 22 needs to be packaged, the top cover plate 21 then covers the case 22. The case 22 may have various shapes and sizes, such as a cuboid, a cylinder and a hexagonal prism. Specifically, the case 22 may be shaped according to the specific shape and size of the electrode assembly 23. The case 22 may be made of various materials, such as copper, iron, aluminum, stainless steel, an aluminum alloy, and plastic, which will not be specially limited in the embodiments of the present application.

The electrode assembly 23 is a component of a battery cell 2 where an electrochemical reaction occurs. One or more electrode assemblies 23 may be contained in the case 22. The electrode assembly 23 is mainly formed by winding or stacking a positive electrode sheet and a negative electrode sheet, and a separator is generally provided between the positive electrode sheet and the negative electrode sheet. The parts of the positive electrode sheet and the negative electrode sheet having active materials constitute a main body portion of the electrode assembly 23, and the parts of the positive electrode sheet and the negative electrode sheet having no active materials respectively constitute tabs. The positive tab and the negative tab may be located at one end of the main portion together or at two ends of the main body portion respectively. During the charging or discharging process of the battery 100, the positive active material and the negative active material react with an electrolyte solution, and the tabs are connected to the electrode terminals 211 to form a current loop.

In some optional embodiments of the present application, the battery 100 includes a box body 1, a plurality of battery cells 2 and a stabilizing assembly 3. The battery cells 2 are arranged upside down in the box body 1, and a top cover plate 21 faces the bottom 102 of the box body 1 in a height direction Z. The stabilizing assembly 3 includes a first support plate 31 and a second support plate 32, the first support plate 3 is arranged at the top 101 of the box body 1 in the height direction Z and is fixedly connected to the battery cells 2, and the second support plate 32 is arranged at the bottom 102 of the box body 1 and is fixedly connected to the battery cells 2.

It should be noted that the embodiments in the present application and the features of the embodiments can be combined with each other without conflict.

Finally, it should be noted that the above embodiments are merely used for illustrating rather than limiting the technical solutions of the present application. Although the present application has been described in detail with reference to the above embodiments, those of ordinary skill in the art should understood that the technical solutions specified in the above various embodiments can still be modified, or some of the technical features therein can be equivalently substituted; but such modifications or substitutions do not make the essence of the corresponding technical solutions depart from the spirit and scope of the technical solutions of the various embodiments of the present application.

## Claims

1. A battery, comprising:
a box body (1), having a top (101) and a bottom (102) opposite to each other in a height direction of the box body (1);
a plurality of battery cells (2) arranged upside down in the box body (1), a top cover plate (21) of each of the battery cells (2) being arranged to face the bottom (102) of the box body (1); and
a stabilizing assembly (3) fixedly connected to the battery cells (2).

2. The battery according to claim 1, wherein the stabilizing assembly (3) comprises a first support plate (31) and a second support plate (32), the first support plate (31) is arranged at the top (101) of the box body (1) and is fixedly connected to the battery cells (2), and the second support plate (32) is arranged at the bottom (102) of the box body (1) and is fixedly connected to the battery cells (2).

3. The battery according to claim 2, wherein the surface of the second support plate (32) that faces the battery cells (2) is provided with a plurality of suspension beams (321), and the plurality of suspension beams (321) are arranged at intervals along the second support plate (32) in a length direction of the box body (1), and extend on the second support plate (32) in a width direction of the box body (1).

4. The battery according to claim 3, wherein the top cover plate (21) comprises a functional area (201) and shoulders (202), the functional area (201) is provided with electrode terminals (211), the shoulders (202) are located on two sides of the functional area (201) in the length direction, and the battery cell (2) is fixedly connected to the suspension beams (321) via the shoulders (202).

5. The battery according to claim 4, wherein the electrode terminals (211) are arranged between the two adjacent suspension beams (321), and the electrode terminals (211) are arranged spaced apart from the second support plate (32).

6. The battery according to claim 5, wherein, in the height direction, the suspension beam (321) has an extension height greater than that of the electrode terminal (211).

7. The battery according to claim 5, wherein the functional area (201) is further provided with a pressure relief mechanism (212), the pressure relief mechanism (212) is arranged spaced apart from the second support plate (32), and the electrode terminals (211) are arranged on two sides of the pressure relief mechanism (212) in the length direction.

8. The battery according to claim 4, wherein the shoulders (202) of the two adj acent battery cells (2) are jointly fixed to the same suspension beam (321).

9. The battery according to claim 8, wherein, in the length direction, a width D1 of the suspension beam (321) and an extension width D2 of the shoulder (202) satisfy: 0.5D2 ≤ D1 ≤ 2D2.

10. The battery according to claim 3, wherein the two adjacent battery cells (2) are electrically connected to each other via a bus component (24), and an extension length of one of the two adjacent suspension beams (321) is less than that of the other in the width direction, to form an avoidance notch (322), the avoidance notch (322) being configured to avoid the bus component (24).

11. The battery according to claim 3, wherein the suspension beams (321) are integrally formed with or detachably connected to the second support plate (32).

12. The battery according to claim 3, wherein, in the height direction, an extension height of the suspension beam (321) is a first dimension H1, the first dimension H1 satisfying 0.5 mm ≤ H1 ≤ 30 mm.

13. The battery according to claim 12, wherein a ratio H1/M of the first dimension H1 to the weight M of the single battery cell (2) satisfies 0.05 mm/Kg ≤ H1/M ≤ 50 mm/ Kg.

14. The battery according to claim 2, wherein the box body (1) further comprises a cover body (4) arranged at the bottom (102), and the cover body (4) is fixedly connected to the box body (1).

15. The battery according to claim 14, wherein the second support plate (32) is fixedly connected to the cover body (4).

16. An electrical apparatus, comprising a battery according to any one of claims 1-15, the battery being configured to supply electric energy.
